# EUROPEAN PATENT SPECIFICATION

(11) **EP 3 479 620 B1**
(45) Date of publication and mention of the grant of the patent: **24.02.2021**
(21) Application number: 16907753.4
(22) Date of filing: 04.07.2016
(51) Int. Cl.: H04W 74/08

(54) **METHOD AND APPARATUS FOR CONTROLLING TRANSMISSION IN WIRELESS COMMUNICATION SYSTEM**
VERFAHREN UND VORRICHTUNG ZUR STEUERUNG DER ÜBERTRAGUNG IN EINEM DRAHTLOSKOMMUNIKATIONSSYSTEM
PROCÉDÉ ET APPAREIL DE CONTRÔLE DE TRANSMISSION DANS UN SYSTÈME DE COMMUNICATION SANS FIL

(43) Date of publication of application: 08.05.2019
(73) Proprietor: Telefonaktiebolaget LM Ericsson (publ), 164 83 Stockholm (SE)
(72) Inventor: LI, Shaohua, Beijing 100102 (CN); LI, Gen, Beijing 100102 (CN); LIU, Jinhua, Beijing 100102 (CN)
(74) Representative: Zacco Sweden AB
(86) International application number: PCT/CN2016/088441
(87) International publication number: WO 2018/006248

(56) References cited:
- EP-A1- 2 104 292
- EP-A1- 2 785 134
- WO-A1-2005/071897
- WO-A1-2016/039681
- CN-A- 101 119 585
- CN-A- 102 395 147
- CN-A- 102 665 254
- CN-A- 102 781 069
- US-A1- 2004 264 423

## Description

### TECHNICAL FIELD

The non-limiting and example embodiments of the present disclosure generally relate to a technical field of wireless communications, and specifically to method and an apparatus for controlling transmission in a shared frequency band.

### BACKGROUND

This section introduces aspects that may facilitate a better understanding of the disclosure. Accordingly, the statements of this section are to be read in this light and are not to be understood as admissions about what is in the prior art or what is not in the prior art.

To meet an ever increasing data traffic demand from users, in particular, in concentrated high traffic buildings or hot spots, more and more cellular operators are considering radio access in an unlicensed spectrum as a complementary means to augment their capabilities for offering mobile broadband services. Licensed assisted access (LAA) developed by the third generation partnership project (3GPP) is a solution based on carrier aggregation of a primary carrier (also referred to as a primary cell or a Pcell) in a licensed band and a secondary carrier (also referred to as a secondary cell or a Scell) in an unlicensed band for enabling an efficient use of a large amount of available spectrum in the unlicensed bands.

One target of a LAA solution is to enable effective and fair coexistence with other wireless access techniques, such as wireless fidelity (Wi-Fi), in the unlicensed bands. Therefore, a LAA solution should be designed with the target for fair coexistence with existing Wi-Fi networks in mind, and should not impact existing Wi-Fi services more than an additional Wi-Fi network does on a same carrier, with respect to throughput and latency.

Another target of the LAA solution is to enable effective and fair coexistence among LAA networks deployed by different operators, so that the LAA networks deployed by different operators can achieve comparable performance, with respect to throughput and latency.

To meet the design targets, Listen-before-talk (LBT) functionality may be adopted in a LAA system. The LBT procedure is defined as a mechanism by which equipment applies a clear channel assessment (CCA) check before using a channel. The CCA utilizes, for example, energy detection to determine presence or absence of other signals on a channel in order to determine whether a channel is occupied or clear. Since carrier sensing via LBT is one way for fair sharing of an unlicensed spectrum, it has been considered to be a vital feature for fair and friendly operation in the unlicensed spectrum in a single global solution framework in 3GPP.

For a wireless system operating in an unlicensed frequency band, communication has to be controlled in order to satisfy the coexistence requirement and to increase resource efficiency. US2004/264423A1 describes a background art of a method and apparatus to provide channel access parameter. WO2016039681A1 describes a background art of a method performed by a radio access node for scheduling a control channel and/or a data channel to a communication terminal in a wireless communication network.

### SUMMARY

The invention is defined by the independent claims. Furthermore, embodiments of the invention are defined by the claims. The unlicensed band (e.g., 5GHz) may be a frequency band shared by various wireless systems and devices. Though LBT enables coexistence of wireless systems in the unlicensed band, it still results in transmission collision in certain scenarios due to limited start time positions for a transmission.

In order to solve at least part of the above problems, a method and an apparatus are provided in the present disclosure. It can be appreciated that embodiments of the present disclosure are not limited to a wireless system operating in an unlicensed band, but could be more widely applied to any application scenario where similar problems exist.

Various embodiments of the present disclosure mainly aim at providing a method and an apparatus for controlling a transmission between a transmitter and a receiver, for example, in a shared frequency band. Each of the transmitter and the receiver could be, for example, a network device or a terminal device. Other features and advantages of embodiments of the present disclosure will also be understood from the following description of specific embodiments when read in conjunction with the accompanying drawings, which illustrate, by way of example, the principles of embodiments of the present disclosure.

In a first aspect of the disclosure, there is provided a method implemented at a network device. The method includes: determining a collision probability with one or more neighboring transmitters, wherein the collision probability indicates a probability for a plurality of transmissions to collide due to occupying same or overlapping transmission resources; selecting a start time position for a plurality of burst transmissions related to the network device based on a result of the determination; wherein selecting the start time position for the plurality of burst transmissions related to the network device based on the result of the determination comprises: in response to determining that the collision probability is above a first threshold, selecting a first start time position from a set of candidate start time positions for a first plurality of burst transmissions in a first time interval; monitoring a transmission characteristic of the first plurality of burst transmissions in the first time interval; and reselecting a second start time position from the set of candidate start time positions for a second plurality of burst transmissions in a subsequent second time interval based on the monitored transmission characteristic; and indicating the selected start time position to a terminal device.

In a second aspect of the disclosure, there is provided a network device, comprising: a collision determination unit, configured to determine a collision probability with one or more neighboring transmitters, wherein the collision probability indicates a probability for a plurality of transmissions to collide due to occupying same or overlapping transmission resources;a selection unit, configured to select a start time position for a plurality of burst transmissions related to the network device based on a result of the determination, wherein said selection unit comprises an initial selection unit, a monitoring unit and a reselection unit, and wherein,in response to a determination made by the collision determination unit that the collision probability is above a first threshold, the initial selection unit is configured to select a first start time position from a set of candidate start time positions for a first plurality of burst transmissions in a first time interval; the monitoring unit is configured to monitor a transmission characteristic of the first plurality of burst transmissions in the first time interval; and the reselection unit is configured to reselect a second start time position from the set of candidate start time positions for a second plurality of burst transmissions in a subsequent second time interval based on the monitored transmission characteristic; and an indication unit, configured to indicate the selected start time position to a terminal device.

According to the various aspects and embodiments as mentioned above, collision of transmissions from neighboring transmitters can be reduced, and spectrum efficiency of the wireless communication system may be improved.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 illustrates an example wireless communication network 100 in which embodiments of the disclosure may be implemented;
FIGs. 2a-2b illustrate potential start time positions for a transmission ;
FIG. 3a illustrates a scenario with transmission collision;
FIG. 3b illustrates a scenario where reservation signals are inserted to avoid transmission collision;
FIGs. 4a-4b illustrate flowcharts of a method implemented at a network device according to an embodiment of the present disclosure;
FIG. 5 illustrates timing difference between different cells ;
FIGs. 6a-6c illustrate flowcharts of example implementations for selecting a start time position;
FIG. 7 illustrates a flowchart of another method implemented at a network device according to an embodiment of the present disclosure;
FIG. 8 illustrates flowcharts of a method implemented at a terminal device according to an embodiment of the present disclosure;
FIG. 9 illustrates a schematic block diagram of an apparatus 900 implemented as/in a network device according to an embodiment of the present disclosure;
FIG. 10 illustrates a schematic block diagram of an apparatus 1000 implemented as/in a terminal device according to an embodiment of the present disclosure; and
FIG. 11 illustrates a simplified block diagram of an apparatus 1110 that may be embodied as/in a network device, and an apparatus 1120 that may be embodied as/in a terminal device.

### DETAILED DESCRIPTION

Hereinafter, the principle of the present disclosure will be described with reference to illustrative embodiments. It should be understood, all these embodiments are given merely for one skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

References in the specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

As used herein, the term "wireless communication network" refers to a network following any suitable wireless communication standards, such as LTE-Advanced (LTE-A), LTE, Wideband Code Division Multiple Access (WCDMA), High-Speed Packet Access (HSPA), and so on. Furthermore, the communications between network devices in the wireless communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future.

As used herein, the term "network device" refers to a device in a wireless communication network via which a terminal device accesses the network and receives services therefrom. The network device may refer to a base station (BS) or an access point (AP), for example, a node B (NodeB or NB), an evolved NodeB (eNodeB or eNB), a Remote Radio Unit (RRU), a radio header (RH), a remote radio head (RRH), a relay, a low power node such as a femto, a pico, and so forth, depending on the applied terminology and technology.

The term "terminal device" refers to any end device that can access a wireless communication network and receive services therefrom. By way of example and not limitation, a terminal device may be referred to as user equipment (UE), a Subscriber Station (SS), a Portable Subscriber Station, a Mobile Station (MS), or an Access Terminal (AT). The terminal device may include, but not limited to, a mobile phone, a cellular phone, a smart phone, a tablet, a wearable device, a personal digital assistant (PDA), portable computers, image capture terminal devices such as digital cameras, gaming terminal devices, music storage and playback appliances, wearable terminal devices, vehicle-mounted wireless terminal devices and the like. In the following description, the terms "terminal device", "terminal", "user equipment" and "UE" may be used interchangeably.

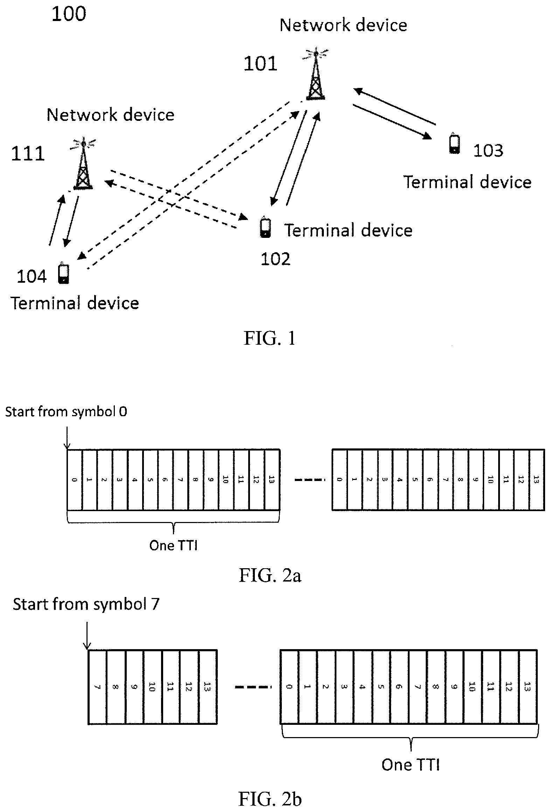

FIG. 1 illustrates an example wireless communication network 100 in which embodiments of the disclosure may be implemented. As shown in FIG. 1, the wireless communication network 100 may include one or more network devices, for example network devices 101 and 111, which may be in a form of an eNB. It will be appreciated that the network device 101 or 111 could also be in a form of a Node B, BTS (Base Transceiver Station), and/or BSS (Base Station Subsystem), access point (AP) and the like, and the network device 101 and 111 may be in different forms. The network device 101 may provide radio connectivity to a set of terminal devices (for example UEs 102 and 103) within its coverage, while the network device 111 may provide radio connectivity to another set of terminal devices, for example UE 104 shown in FIG. 1. A downlink (DL) transmission herein refers to a transmission from the network device to a terminal device, and an uplink (UL) transmission refers to a transmission in an opposite direction.

The wireless communication network 100 may operate in a shared frequency band, for example but not limited to an unlicensed band. A spectrum license is permission given by a government agency (such as the U.S. Federal Communications Commission) to an entity that gives that entity exclusive rights to use a frequency band for a particular application, such as radio broadcasting. Licenses are designated for a specific geographic area, such as rural areas, metropolitan areas, regions, or the entire nation. A licensed band could be a band with said spectrum license, and an unlicensed band could be a band without said spectrum license.

In the shared frequency band, simultaneous downlink transmission from the network device 101 and the neighbor network device 111, or, simultaneous uplink transmission from more than one neighboring terminal devices (for example terminal devices 102 and 104) may result in serious interference illustrated as dotted lines in FIG. 1. Though LBT or other similar carrier sensing techniques may be exploited to reduce the potential interference, a collision in transmission may still occur in certain scenarios.

Principle for LBT will be described below in a context of 3GPP LAA. The LBT procedure is described in Section 15.1.1 of 3GPP TS 36.213 v 13. 0.1. An eNB may transmit a transmission including physical downlink shared channel (PDSCH) data on a channel where transmission(s) from LAA Scell(s) are performed, after the channel is sensed to be idle during a defer duration *T_{d}* and after a counter *N* is zero. The counter *N* is adjusted based on a result of the sensing according to the steps below:
- Step 1: set *N* = *Nᵢₙᵢₜ*, where *Nᵢₙᵢₜ* is a random number uniformly distributed between 0 and *CWₚ*, and *CWₚ* denotes a size of a contention window dependent on channel access priority class p; the channel access priority class is configurable and may vary for different services;
- Step 2: if *N* > 0 and the eNB chooses to decrement the counter, set *N* = *N* - 1;
- Step 3: sense the channel for an additional slot duration, and if the additional slot duration is sensed as idle, go to step 4; otherwise, go to step 5;
- Step 4: if *N* = 0, stop; otherwise, go to step 2;
- Step 5: sense the channel during the slot durations of an additional defer duration *T_{d}* ; and
- Step 6: if the channel is sensed to be idle during the slot durations of the additional defer duration *T_{d},* go to step 2; otherwise, go to step 5.

If an eNB has not performed a transmission including PDSCH, after step 4 in the procedure above, on a channel where LAA Scell(s) transmission(s) are performed, the eNB may transmit the transmission including PDSCH on the channel after the channel is sensed to be idle at least in the slot durations of an additional defer duration *T_{d}*.

The defer duration *T_{d}* may include duration *T_{f}* = 16*us* immediately followed by *mₚ* consecutive slot durations where each slot duration is *Tₛₗ* = 9*us*, and an idle slot duration *Tₛₗ* is included at the beginning of the *T_{f}.* A slot duration *Tₛₗ* may be considered as idle if the power detected by the eNB for at least 4*us* within the slot duration is less than an energy detection threshold *X*_{Thresh}· Otherwise, the slot duration *Tₛₗ* is considered to be busy. Value of the parameter *mₚ* depends on the channel access priority class p, and *X*_{Thresh} may be adjusted according to the description provided in sub clause 15.1.4 of 3GPP TS 36.213 v 13.0.1.

In the LAA scenario, a burst transmission can be started from symbol 0 or symbol 7 of a subframe consisting of 14 Orthogonal Frequency Division Multiplexing (OFDM) symbols. A burst transmission as used herein is a continuous transmission which starts at a first time instance and stops at a second time instance, and it may also be referred to as a transmission burst. A burst transmission may last for one or multiple subframes. A list of candidate start time position for starting the burst transmission may be sent via a radio resource control (RRC) signaling to terminal devices. As one example, the candidate start time positions may be {0}, {7} or {0, 7}, with 0 and 7 indicating OFDM symbol indexes in the first subframe of the burst transmission. In FIG. 2a, a transmission burst starting from OFDM symbol 0 is illustrated. The transmission burst may last for multiple subframes (e.g., 8 subframes) and the transmission in the first subframe of the multiple subframes starts from OFDM symbol 0. Each subframe has a length of a transmission time interval (TTI) of 1ms according to 3GPP LTE specification. However, embodiments of the present disclosure are not limited to any specific length of the subframe. In FIG. 2b, a transmission burst starting from OFDM symbol 7 is illustrated, which means that the transmission in the first subframe of the multiple subframes only lasts for 0.5 TTI.

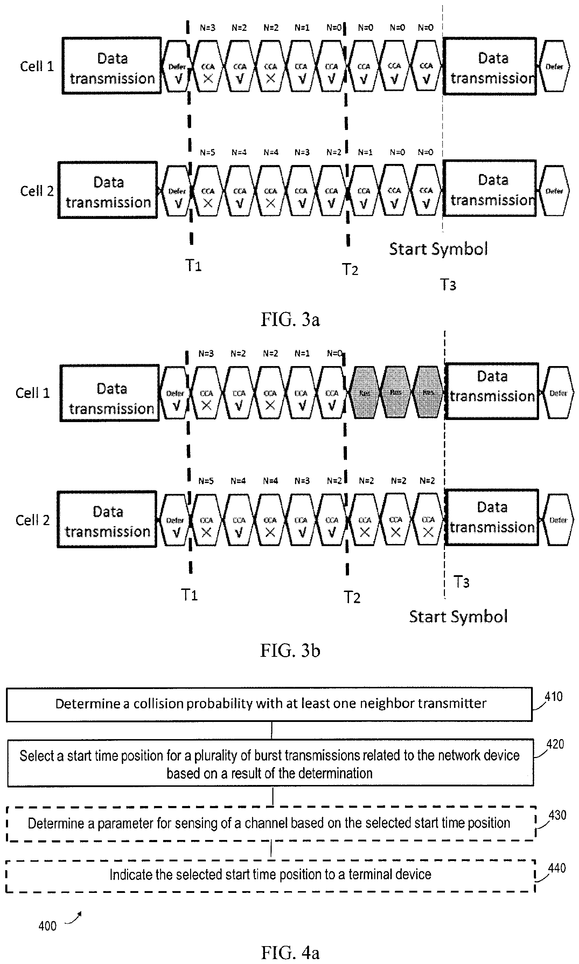

Herein, a channel being available means that the channel satisfies a specified condition of being used. For example, a channel may be determined as available if it has been detected as idle for a defer duration *T_{d}* by a device and a counter *N* at the device side is counted down to zero. Due to limited start time positions, a burst transmission may not be allowed to start immediately after a channel being sensed (also referred to as "detected" hereafter) as available. One example is shown in FIG. 3a. As shown in FIG. 3a, after a defer time duration, both cell 1 and cell 2 begin to sense the channel at time T₁ and in this example, it is assumed that cell 1 has set its backoff counter N to be 3 the cell 2 has set its N to be 5 initially. Then the backoff counter *N* of cell 1 is set to 0 at time T₂ after the channel being sensed to be idle during several slot durations of a defer duration *T_{d}.* At the same time of T₂, N of cell 2 is set to be 2. In this example, T₂ is not an allowed start time position for a burst transmission, and then cell 1 cannot starts its transmission till the earliest candidate start time position time T₃. However, at time T₃, N of cell 2 is also counted down to 0, and it means cell 2 can also start transmission at T₃. As a result, collision of the two cells may occur, though the backoff counter N is different for cell 1 and cell 2 (i.e., *N* = 3 for cell 1 and *N* = 5 for cell 2). That is to say, in certain scenarios, transmission collision cannot be resolved by configuring random backoff counters for different transmitters.

Assume that LBT channel access priority class 3 is used, and a corresponding maximum window size is 64x9 us (i.e., 576 us). Assume that only OFDM symbol 0 is configured as the candidate start time position for a burst transmission, then it will lead to a result that the backoff counter N of any cell will be decremented to 0 before the subframe boundary, since 576us is shorter than 1ms. Therefore, transmissions of different neighbor cells may collide with a very high probability.

Inserting reserved signals is one way for solving the above problem. An example for a channel accessing procedure with reserved signal is illustrated in FIG. 3b. As shown in FIG. 3b, when the backoff counter N of cell 1 is set to be 0 at time T₂ after the channel being sensed to be idle during several slot durations of a defer duration *T_{d},* the reserved signal(s) are transmitted to occupy the channel until the earliest candidate start time position T₃ which may be a subframe boundary (for example, OFDM symbol 0). When the reserved signal is transmitted by the cell 1, the cell 2 will assume that the channel is busy, and thus freeze its backoff counter, as shown in FIG. 3b. Therefore, in this example, only cell 1 can start transmission at time T₃. In this way, collision of the two cells is resolved.

However, the transmission of reserved signal may not be permitted, according to some regulation in a shared frequency band. For example, the transmission of the reserved signal(s) may be considered as a waste of resource, since it does not carry any payload data and at the same time prevents the idle channel to be used by other wireless systems. Therefore solution for reducing collision probability without transmitting reserved signals is desired. The collision probability refers to a probability for a plurality of transmissions to collide due to occupying same or overlapping transmission resources.

In order to solve at least part of the above problems, methods, apparatuses and computer programs have been proposed herein. It should be appreciated that embodiments of the disclosure are not limited to a wireless system operating in a shared frequency band (e.g., an unlicensed band), but could be more widely applied to any application scenario where similar problem exists. Likewise, embodiments of the present disclosure are not limited to any LBT or channel sensing technique.

Reference is now made to FIG. 4a, which show a flowchart of a method 400 implemented at a network device side according to an embodiment of the present disclosure. For simplicity, the method 400 will be described below with reference to the network device 101 shown in FIG. 1, however, it can be appreciated that, the method 400 could also be implemented by any other network device, for example network device 111 shown in FIG. 1.

As illustrated in FIG. 4a, at block 410, the network device 101 determines a collision probability with one or more neighboring transmitters. In an example, the neighboring transmitter may be the network device 111 or another network device not shown in FIG. 1. In another example, the neighboring transmitter may be a network device from another wireless communication network with different radio access technology (RAT). For example, the network device 101 may operate according to 3GPP LTE, while the neighboring transmitter may be an access point (AP) operating according to IEEE 802.11. Alternatively, in one embodiment, the neighboring transmitter may be a terminal device.

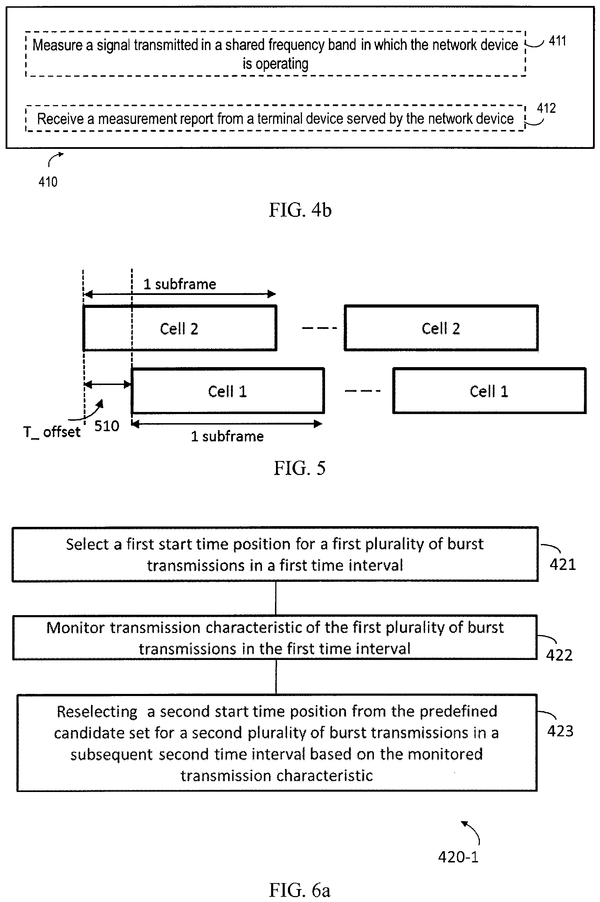

The determining operation at block 410 may be performed in various manners. Some example implementations for the determining action at block 410 will now be discussed with reference to FIG. 4b. As illustrated in FIG. 4b, in one embodiment, at block 411, the network device 101 may determine the collision probability by measuring a signal transmitted in a frequency band in which the network device 101 is operating. The frequency band may be a shared frequency band. It should be noted that, the measuring action 411 may include detecting signal power of the signal, and/or, detecting/decoding information/payload conveyed in the signal. For example, the network device may measure a received signal power of a reference signal from a potential neighbor cell, or detect a beacon from a potential neighbor AP, or detect system information broadcasted be a potential base station. A result of the measurement indicates information related to the collision probability.

In another example shown in FIG. 4b, the network device may determine the collision probability by receiving, at block 412, a report from a terminal device served by the network device. The report indicates information related to the collision probability. In this example, the terminal device may measure/detect a signal transmitted in a frequency band in which the network device 101 is operating, and report a result of the measurement/detection to the network device.

Alternatively or additionally, in one embodiment, the determining operation at block 410 may be performed based on information indicating one or more of: whether the one or more neighboring transmitters transmit in a channel, whether the one or more neighboring transmitters are synchronized with the network device, a timing difference in a subframe boundary between the one or more neighboring transmitters and the network device, whether the one or more neighboring transmitters and the network device are supported by a same operator, a further (i.e., another) start time position for a further transmission by the one or more neighboring transmitters, a configuration on the start time position for the transmission related to the network device, and a load status of a frequency band in which the network device is operating.

Embodiments are not limited to any specific way for obtaining the above information. Just for illustration, in one embodiment, at least part of the information may be obtained by measuring a channel or by receiving a report from a terminal device by the network device, for example at block 411 and 412 of FIG. 4b, respectively. One example for obtaining the information on whether the LAA cells are synchronized or asynchronized is to measure (by the network device or a terminal device served by the network device) demodulation reference signal (DRS) or common reference signal (CRS) or any other reference signal in an unlicensed spectrum. In another embodiment, such information may be obtained from a detection of a licensed carrier. Since the licensed carrier and unlicensed carrier may be aligned for the subframe boundary. If the LAAs are asynchronous in the licensed carrier, it may be assumed that they are asynchronous in the unlicensed carrier. It can be appreciated that the information on synchronization may be obtained based on detection in both license carrier and unlicensed carrier. The information on timing difference (e.g., offset in subframe boundary) may be obtained in similar way.

One example for obtaining information on whether the network device and the one or more neighboring transmitters (e.g., an LAA cell) come from (or supported by) the same operator is to get PLMN information via an available signaling or signal or channels. One example for detecting the start time position (or a start time position pattern) of a neighbor cell could be based on DRS and/or CRS or any other reference signal.

In some embodiments, to obtain at least part of the above information, the network device may instruct a terminal device to detect whether the LAA cells operating on unlicensed carriers are synchronized or asynchronized, and/or the timing difference of the subframe boundary, and/or the LAA cells operated on unlicensed carriers comes from the same operator or different operators, and/or the pattern for the start time position of burst transmissions of a neighbor cell, and/or the system load, and then receive a report from the terminal device about results of the detection.

In some other embodiments, at least part of such information may be obtained from another network device, or a control network node. For example, the network device may receive configuration information on the start time position from other node, such as an operation administration and maintenance (OAM) node.

Likewise, embodiments of the present disclosure are not limited to any specific way for determining the collision probability based on the above information. Just for illustration, in one example, the information indicates the timing difference in a subframe boundary between the one or more neighboring transmitters and the network device. FIG.5 illustrates schematically a timing difference 510 between a cell 1 and a cell 2 which is denoted as T_offset. In this example, the cell 1 may be served by the network device 101, and the cell 2 may be the neighboring transmitter. Then at block 410 of FIG. 4a or FIG. 4b, the network device may determine that the collision probability P_{collision} is below a threshold T_{c}, if the indicated T_offset 510 between cell 1 and cell 2 is greater than a threshold T_{diff}.

Still in reference with FIG. 4a, at block 420, the network device 101 selects a start time position for a plurality of burst transmissions related to the network device based on a result of the determination of block 410. In this way, the start time position is selected in such a way that the collision probability can be reduced.

In practice, based on the determined collision probability at block 410 of FIG. 4a or FIG. 4b, the network device 101 may select the start time position for the plurality of burst transmissions related to the network device in various ways, and embodiments of the present disclosure are not limited to any specific way/rules for the selection. Just for illustration, in one embodiment, if the collision probability is determined to be below a threshold (e.g., T_{c}), at block 420, the network device may select the start time position regardless of a start time position selected by the one or more neighboring transmitters. This enables the network device to select the start time position more flexibly when the collision probability is determined as low.

In another embodiment, if the collision probability is determined to exceed the threshold, at block 420, the network device selects the start time position to reduce the collision probability. For example, the network device may adjust the selected start time position based on a monitored collision probability.

In another embodiment, it is possible to define a plurality of conditions related to the timing difference between the network device and the one or more neighboring transmitters, for example, the T_offset 510 as discussed above with reference to FIG. 5. As one example, two conditions are listed below:
- Condition 1: 0≤T_offset<*Threshold₁*
- Condition 2: *Threshold₁* ≤ T_offset < *Threshold₂*
If all the transmissions of the network device and the neighboring transmitter start from symbol 0, *Threshold₁* may be set to be *T_{d}. Threshold₂* may be 1ms in LTE. If the start time positions of the network device and the neighboring transmitter could be either 0 or 7, *Threshold₂* may be 0.5ms. However, embodiments of the present disclosure are not limited to any specific value of either *Threshold₁* or *Threshold₂.* At block 410 of FIG. 4a, the network device may determine which condition is satisfied. Then at block 420, selection operation may be performed depending on a result of the determination. That is, when T_offset satisfies one condition, a method is used for selecting the start time position(s), and when T_offset satisfies another condition, another different method is used for the selection. For example, when condition 2 is satisfied, the network device may select its own start position regardless of the start position(s) of neighbor cell; otherwise, eNB will select its own start position by taking into account the potential collision with the neighboring transmitter.

In some embodiments, at block 420, the network device may select the start time position(s) randomly from a set of candidate start positions for a downlink (DL) transmission burst, when a given condition is satisfied. The set of candidate start positions may be predefined or configured for the network device via signaling. As one example, it is assumed that symbol 0 or symbol 7 can be configured for the network device 101 and the network device 111 of FIG. 1. In this case, the set of start time positions can be { symbol 0, symbol 7}. In this case, when above condition 1 is satisfied, cell 1 and cell 2 will randomly select symbol 0 or symbol 7 as the start time position. In another example, when only symbol 0 or only symbol 7 can be configured for the network devices 101 and 111, the set of start symbol position can be { symbol 0/7 of the odd subframe, symbol 0/7 of the even subframe}. In this case, when the above condition 1 is satisfied, cell 1 and cell 2 may randomly select symbol 0/7 of the odd subframe or symbol 0/7 of the even subframe as the start symbols for transmission. As another example, the set of start symbol position can consist of any other/additional possible start symbols.

FIGs. 6a-6c illustrates flowcharts of further example implementations of actions 420-1, 402-2, and 420-3 of the selection action 420 shown in FIG. 4a. As shown in FIG. 6a, in the example implementation 420-1, the selection operation may be performed via blocks 421 to 423. In response to determining at block 410 of FIG. 4a or FIG. 4b, that the collision probability is above a first threshold, at block 421, the network device may select a first start time position from a set of candidate start time positions for a first plurality of burst transmissions in a first time interval. For example, the first time interval may be 1 second. By applying the selected start position to a first time interval longer than a single burst transmission, semi-static configuration for the start time position can be realized.

At block 422, the network device 101 may monitor transmission characteristic of the first plurality of burst transmissions in the first time interval. Examples of the monitored transmission characteristic may include, but are not limited to, collision probability, bit error rate, block error rate, number of NACK feedbacks for the first plurality of burst transmissions, number of retransmissions and modulation and coding schemes (MCs) adopted for the first plurality of burst transmissions. The monitored transmission characteristic indicates a collision probability directly or indirectly.

As shown in FIG. 6a, at block 423, the network device may reselect a second start time position from the set of candidate start time positions for a second plurality of burst transmissions in a subsequent second time interval based on the monitored transmission characteristic. The reselected second start time position may be same or different from the first start time position, depending on a collision probability indicated by the monitored transmission characteristic. This embodiment enables adjusting the start time position to reduce collision probability.

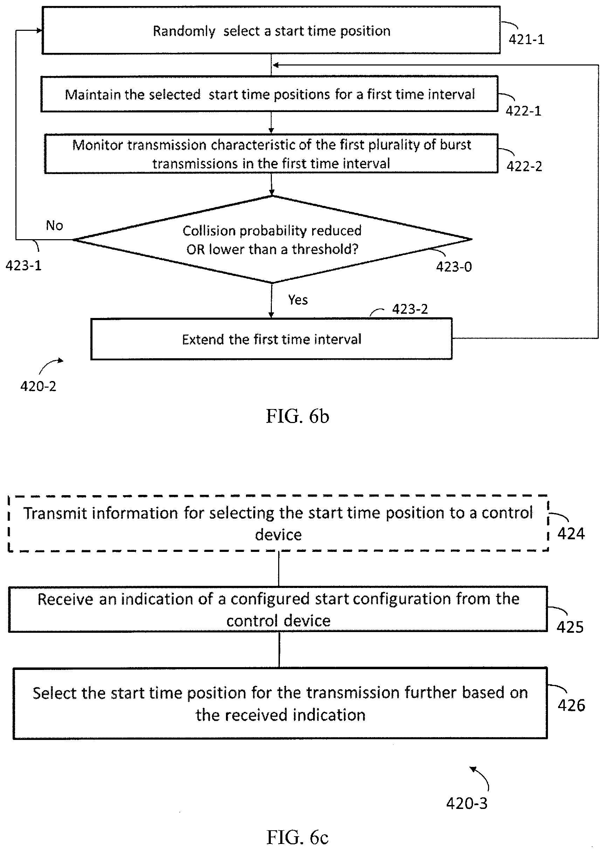

In FIG. 6b, another example implementation 420-2 of the selection action 420 of FIG. 4a or 4b is illustrated. In this example implementation, the network device also selects the start time position for a plurality of burst transmissions in a semi-static manner. As illustrated, at block 421-1, the network device may randomly select a start time position, for example, from a set of candidate start time positions. This block 421-1 may be an example implementation of the block 421 shown in FIG. 6a. At block 422-1, the network device 101 maintains the selected start time position for a first time interval. That is, the selected start time position is applied to all the burst transmissions in the first time interval. At block 422-2, the network device may monitor transmission characteristic of the plurality of burst transmissions, which is similar to that described with reference to block 422 of FIG. 6a. Then at blocks 423-0, the network device determines, based on the monitored transmission characteristic, whether collision probability is reduced or is lower than a threshold (e.g., a threshold T_{c}). If so, the same start time position selected at block 421-1 is applied to a following second time interval. In other words, the first time interval is extended, as shown in block 423-2. Otherwise, at block 423-1, the network device 101 will reselect, from the set of candidate start time positions, a different start time position for use in the following second time interval. The blocks 423-0, 423-1, and 423-2 provides an example implementation for the block 423 shown in FIG. 6a, and it can be appreciated that at block 423, the network device may reselect the second start time position in accordance with a different rule than that shown in FIG. 6b.

In one embodiment, at block 422, the network device may also monitor a system load. Then at block 423-0, the network device may determine whether to extend the first time interval by further taking into account the system load. For example, if the average load is similar and the probability is reduced, cell 1 can extend the first time interval. In another example, if the average load is increased, the network device may determine to extend the first interval and keep the start time position for the extended first time interval even if the collision probability increases a bit.

Reference is now made to FIG. 6c which illustrate another example implementation 420-3 for the selection action 420 shown in FIG. 4a. In this example, the selection of the start time position may be at least partly based an indication from a control device. In particular, as shown in FIG. 6c, at block 424, the network device transmits information for selecting the start time position to a control device.

For example, the information may indicate one or more of: whether the one or more neighboring transmitters transmit in a channel, whether the one or more neighboring transmitters are synchronized with the network device, a timing difference in a subframe boundary between the one or more neighboring transmitters and the network device, whether the one or more neighboring transmitters and the network device are supported by a same operator, a candidate start time position for the network device, a further start time position for a further plurality of burst transmission by the one or more neighboring transmitters, a configuration on the start time position for the plurality of burst transmission related to the network device, and a load status of a frequency band in which the network device is operating.

In another embodiment, the network device may send its own start position configuration information, geometric information, and/or neighbor cell related information to the control device. The control device makes coordination and determines the start time position for each cell and then sends the configuration to each cell.

In another embodiment, different or additional information may be transmitted to the control device by the network device at block 424. It should be noted that the information listed above is provided merely for illustrative purposes, and embodiments of the present disclosure are not limited to any specific information being exchanged between the network device and the control device, as long as the information can facilitate the control device to determine a proper start time position for the network device.

As shown in FIG. 6c, after transmitting the information at block 424, the network device receives an indication of a start time position configuration from the control device at block 425. The start time position configuration may include a start time position for the network device to use, or a set of allowed/suggested start time positions for the network device to choose from. Then at block 426, the network device may select the start time position for the plurality of burst transmission at least partly based on the received indication from the control device. In this embodiment, the control device may collect information from a plurality of network devices (e.g., network device 101 and 111 shown in FIG. 1) and then assign a proper start time position for respective network device to avoid collision. The control device may be, for example, a Mobile Management Entity (MME), a gateway such as SGW and PGW, but embodiments of the present disclosure are not limited thereto.

In another embodiment, at block 425, the network device may receive the start time position configuration without transmitting the information to the control device at block 424. In this case, the control device may obtain the information in other way, or determine the start time position for the network device blindly. An example for the control device may be an OAM

Now referring back to FIG. 4a, in some embodiments, the method 400 may further comprise a block 430, where the network device determines a parameter for sensing a channel based on the selected start time position at block 420. The parameter for sensing a channel may include, for example but not limited to, priority class, and/or a time instance for starting the sensing, etc. These embodiments facilitate adaptation of the sensing according to the selected start time position for the burst transmission, so that reducing collision probability and/or increase resource efficiency.

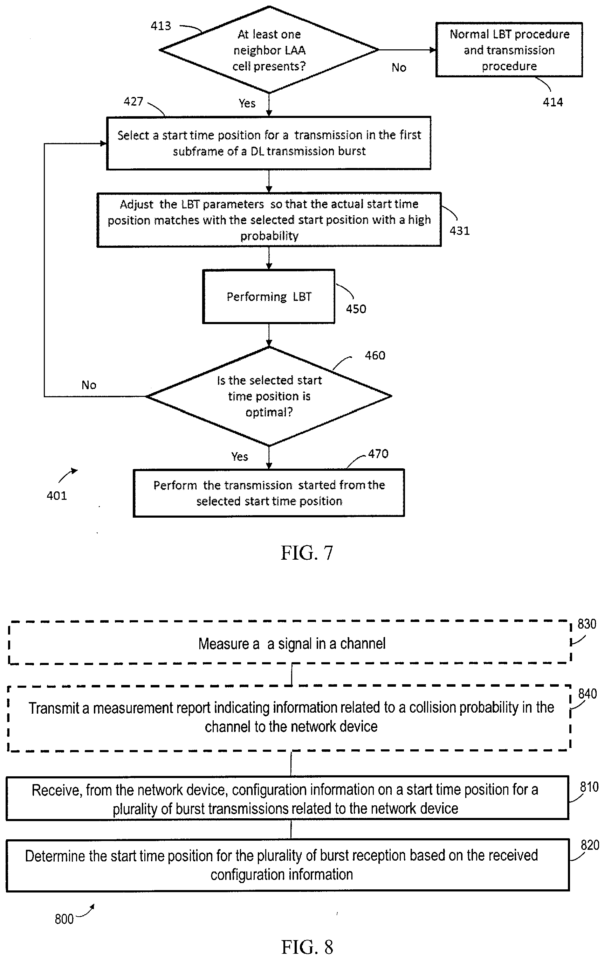

FIG. 7 illustrates a flow chart of another method 401 according to an embodiment of the present disclosure. The method 401 may be considered as an example implementation of method 400 with sensing parameter adjustment. As illustrated in FIG. 7, the network device (e.g., network device 101 shown in FIG. 1) may first detect, at block 413, whether there are one or more neighbor LAA cells. If the one or more neighbor LAA cells are not detected, at block 414, the network device may perform normal LBT procedure and transmission procedure, for example, by following any existing transmission solution.

If one or more neighbor LAA cells are detected, at block 427, the network device selects the start time position for burst transmissions based on some rule(s). The term "start time position" may be used to stand for a start time position in the first subframe of a plurality of subframes occupied by each of the burst transmissions. These rule(s) for selecting a start time position may be similar as that described with reference to method 400 and FIGs. 4a-6c, and the block 427 may perform the selection action in one of block 420, 420-1, 420-2 and 420-3 shown in FIG. 4a, 6a, 6b and 6c respectively.

Upon selection of the start position(s), at block 431, the network device adjusts one or more LBT parameters, so that the actual start time position for the burst transmissions matches with the selected start position with high priority. At block 450, LBT is performed according to the adjusted parameter(s). Optionally, at block 460, the network device checks the selected start position is optimal for transmission or not according to a result of the LBT. If the channel at the selected start position is optimal for the transmission, at block 470, the transmission can be performed starting from the selected start time position. Otherwise, the process may go to block 427 again for reselecting a start time position. This embodiment enables to determine an optimized start time position in an iterative manner.

In some embodiments, selecting a start time position for a plurality of burst transmissions may include selecting a start time position pattern, the start time position pattern indicating a plurality of start time positions for the plurality of burst transmissions. That is to say, in some embodiments, a start time position pattern may be selected at block 420 of FIG. 4a or 4b, blocks 421 and 423 of FIG. 6a, block 421-1 of FIG. 6b, block 426 of FIG. 6c, or block 427 of FIG. 7. As one example, two start time position patterns are defined for the cell 1:
Pattern 1: {0, 7, 7, 0, ..., 7, 7, 7}
Pattern 2: {7, 0, 0, 7, ···, 0, 0, 0}
The k^{th} element in each of the patterns corresponds to a start time position for the k^{th} transmission burst. The network device may select one of the patterns and decide the start time position for respective transmission burst accordingly.

Now referring back to FIG. 4a again, in some embodiments, at block 440, the network device may indicate the selected start time position to a terminal device. In some embodiments, the plurality of burst transmissions to which the selected start time position applies are DL burst transmissions. In this case, the indication from the network device to the terminal device at block 440 may help the terminal device to detect the DL burst transmission from the selected start time position. Otherwise, the terminal device may have to detect the DL burst transmission blindly. In another embodiment, the plurality of burst transmissions to which the selected start time position applies are UL burst transmissions, and in this case, the indication from the network device to the terminal device at block 440 informs the terminal device to start the UL burst transmission from the selected start time position. It would be beneficial to reduce collision.

In one embodiment, at block 440, the network device may indicate the start position to the terminal device explicitly, via a scheduling grant, a multimedia access control (MAC) control element, system information, a physical layer signaling, or a RRC signaling etc.. In another embodiment, at block 440, the network device may notify the UE to randomly select one start time position from an configured start position set via a MAC control element, system information, a physical layer signaling or a RRC signaling etc.

Reference is now made to FIG.8 which shows a flowchart of a method 800 implemented at a terminal device (e.g., terminal device 102, 103 or 104 of FIG. 1). For simplicity, the method 800 will be described below with reference to the terminal device 102 shown in FIG. 1, however, it would be appreciated that the method 800 could also be implemented by any other terminal device, for example terminal device 103 or 104 shown in FIG. 1.

As illustrated in FIG. 8, at block 810, the terminal device 102 receives, from a network device (e.g., network device 101 shown in FIG. 1), configuration information on a start time position for a plurality of burst transmissions related to the network device. In some embodiments, examples of content included in the configuration information may include, but are not limited to, one of an indication of a selected start time position, an indication of a selected start time position pattern, an indication of a set of candidate start time positions, and an indication of a set of candidate start time position patterns.

At block 820, the terminal device 102 determines the start time position for the plurality of burst transmissions based on the received configuration information. As described above with reference to the methods 400 and 401, the plurality of burst transmissions may be DL transmission from the network device, or UL transmission from the terminal device. In the first case, the determined start time position facilitates detection of the DL transmission from the network node with reduced blind detection. In the latter case, the determined start time position facilitates transmission of an UL burst with reduced collision probability. Descriptions on candidate start time position and start time position patterns provided with reference to method 400 and 401 also apply here, and will not be repeated for simplicity.

As illustrated in FIG. 8, in some embodiments, the terminal device may optionally measure a signal in a channel at block 830, and then transmit a report indicating information related to a collision probability in the channel to the network device based a result of the measurement. In one embodiment, the information related to the collision probability may include, for example, one or more of the following: whether one or more neighboring transmitters present in the channel (i.e., transmit in the channel), whether the one or more neighboring transmitters are synchronized with the network device, a timing difference in a subframe boundary between the one or more neighboring transmitters and the network device, whether the one or more neighboring transmitters and the network device are supported by a same operator, a further start time position for a further plurality of burst transmission by the one or more neighboring transmitters, and a load status of the channel. In another embodiment, alternative or additional information may be indicated by the report.

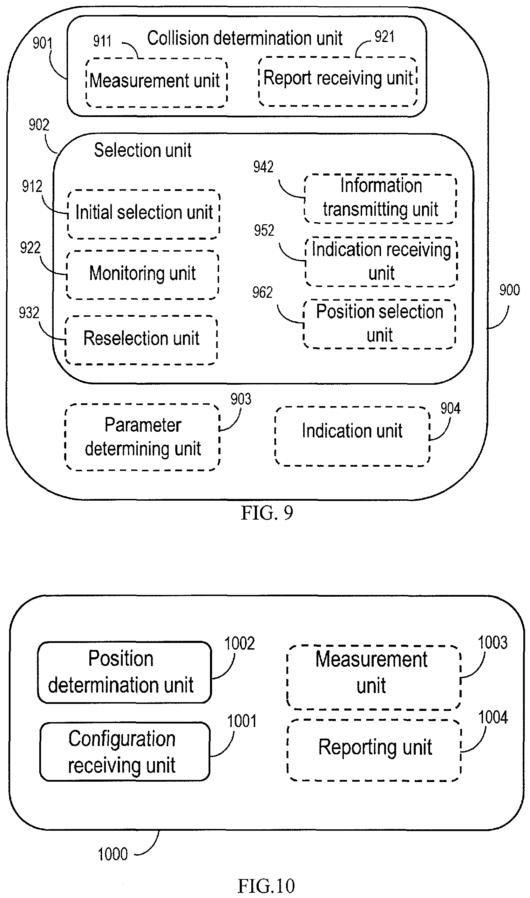

FIG. 9 illustrates a schematic block diagram of an apparatus 900 in a wireless communication network (e.g., the wireless communication network 100 shown in FIG. 1). The apparatus may be implemented as/in a network device, e.g., the network device 101 shown in FIG. 1. The apparatus 900 is operable to carry out the example method 400 or 401 described with reference to FIGs. 4a-7 and possibly any other processes or methods. It is also to be understood that the method 400 or 401 is not necessarily carried out by the apparatus 900. At least some steps of the method 400 or 401 can be performed by one or more other entities.

As illustrated in FIG. 9, the apparatus 900 includes a collision determination unit 901 and a selection unit 902. The collision determination unit 901 is configured to determine a collision probability with one or more neighboring transmitters. The one or more neighboring transmitters may be, for example, network device 111 shown in FIG. 1, or another network node in the wireless communication system not shown in FIG. 1. The selection unit 202 is configured to select a plurality of burst transmissions related to the network device (101, 111) based on a result of the determination from the collision determination unit 901.

The collision determination unit 901 may be configured to determine the collision probability with the one or more neighboring transmitters in various ways. In some embodiments, at least some of the descriptions on the determining operation, as well as information used for the determination, provided with reference to block 410 in FIG. 4a or FIG. 4b also apply here. For example, the measurement unit 901 may comprise a measurement unit 911 and/or a report receiving unit 921. The measurement unit 901 may be configured to measure a signal transmitted in a frequency band in which the network device is operating; and the report receiving unit 921 may be configured to receive a report from a terminal device served by the network device, the report indicating information related to the collision probability.

Likewise, the selection unit 202 may be configured to select the start time position or a start time position pattern following various rules. In some embodiments, at least some of the description on the selecting action provided with reference to FIG. 4a-7 may also apply here.

For example, the selection unit 902 may comprises an initial selection unit 912, a monitoring unit 922 and a reselection unit 932. In response to a determination made by the collision determination unit 901 that the collision probability is above a first threshold, the initial selection unit 912 may configured to select a first start time position from a set of candidate start time positions for a first plurality of burst transmissions in a first time interval; the monitoring unit 922 may be configured to monitor transmission characteristic of the first plurality of burst transmissions in the first time interval; and the reselection unit 932 is configured to reselect a second start time position from the set of candidate start time positions for a second plurality of burst transmissions in a subsequent second time interval based on the monitored transmission characteristic. It enables to update the start time position dynamically based on the transmission characteristic. The transmission characteristic may include collision probability, BLER, BER, MCs, etc., and relevant descriptions provided to with reference to method 400 and 401 also apply here. In a further embodiment, said reselection unit 932 may be configured to reselect, from the set of candidate start time positions, the second start time position that is different from the first start time position, if the monitored transmission characteristic indicating a collision probability equal to or greater than a second threshold,; and maintain the selected first start time position unchanged as the second start time position if the monitored transmission characteristic indicating a collision probability below the threshold. It can be appreciated that different rule may be used by the reselection unit 932 in another embodiment.

Alternatively or additionally, in another embodiment, the collision determining unit 901 may be configured to determine the collision probability based on a timing difference in a subframe boundary between the one or more neighboring transmitters and the network device. For example, if the timing difference is less than a third threshold, the collision probability may be considered as high, or higher than a fourth threshold. In a further embodiment, the selection unit 902 may be configured to select the start time position regardless of a start time position selected by the one or more neighboring transmitter, if the collision probability is determined to be below the fourth threshold. In another embodiment, the selection unit 902 may be configured to select the start time position to reduce the collision probability, if the collision probability is determined as equal to or greater than the fourth threshold.

In one embodiment, the selection unit 902 may comprise an information transmitting unit 942, an indication receiving unit 952 and a position selection unit 962. The information transmitting unit 942 may be configured to transmit information for selecting the start time position to a control device. Embodiments are not limited to any specific information, as long as it can facilitate a start time position selection at the control device. The indication receiving unit 952 may be configured to receive an indication of a start time position configuration from the control device; and the position selection unit 962 may be configured to select the start time position for the plurality of burst transmission further based on the received indication.

In some embodiments, said selection unit 902 may be configured to select a start time position by selecting a start time position pattern, the start time position pattern indicating a plurality of start time positions for a plurality of burst transmissions.

Optionally, in one embodiment, the apparatus 900 may further comprise a parameter determining unit 903 configured to determine a parameter for sensing a channel based on the selected start time position. This enables the apparatus to adjust the sensing parameter to matches with the selected start time position, so as to reduce resource waste and reduce collision probability.

Alternatively or additionally, in another embodiment, the apparatus 900 may comprise an indication unit 904 configured to indicate the selected start time position to a terminal device (e.g., the terminal device 102, or 103 shown in FIG. 1). The indication may enable the terminal device to reduce blind detection required for detecting the plurality burst transmissions, or determine a proper time instance for starting the plurality of UL burst transmissions.

FIG.10 illustrates a schematic block diagram of an apparatus 1000 in a wireless communication network (e.g., the wireless communication network 100 shown in FIG. 1). The apparatus 1000 may be implemented as/in a terminal device, e.g., the terminal device 102 shown in FIG. 1 in communication with the network device 101 or the apparatus 900. The apparatus 1000 is operable to carry out the example method 800 described with reference to FIG.8 and possibly any other processes or methods. It is also to be understood that the method 800 is not necessarily carried out by the apparatus 1000. At least some steps of the method 800 can be performed by one or more other entities.

As illustrated, the apparatus 1000 includes a configuration receiving unit 1001 and a position determination unit 1002. The configuration receiving unit 1001 may be configured to receive, from a network device (e.g., the apparatus 900 shown in FIG. 9. or the network device 101 shown in FIG. 1), configuration information on a start time position for a plurality of burst transmissions related to the network device (101, 111). The position determination unit 1002 may be configured to determine the start time position for the plurality of burst transmissions based on the received configuration information. In some embodiments, the received configuration information may comprise one of an indication of a selected start time position, an indication of a selected start time position pattern, an indication of a set of candidate start time positions, and an indication of a set of candidate start time position patterns, however, embodiments are not limited to the exact configuration information being listed herein.

Optionally, in one embodiment, the apparatus 1000 may further comprise a measurement unit 1003 and a reporting unit 1004. The measurement unit 1003 may be configured to measure a signal in a channel; and the reporting unit 1004 may be configured to transmit a report indicating information related to the collision probability to the network device based a result of the measurement. In another embodiment, the information related to the collision probability may include one or more of: whether one or more neighboring transmitters transmit in the channel, whether the one or more neighboring transmitters are synchronized with the network device, a timing difference in a subframe boundary between the one or more neighboring transmitters and the network device, whether the one or more neighboring transmitters and the network device are supported by a same operator, a further start time position for a further plurality of burst transmission by the one or more neighboring transmitters, and a load status of the channel. In another embodiment, different or additional information may be indicated by the report transmitted by the reporting unit 1004. The measurement unit 1003 and a reporting unit 1004 enables the terminal device to provide assistance information to the network device to facilitate a proper start time position for DL and/or UL burst transmissions.

In some embodiments, the units 1001 to 1004 can be configured to perform the operations of block 810 to 840 of method 800, respectively, and therefore, descriptions provided with reference to method 800 and FIG.8 also apply here.

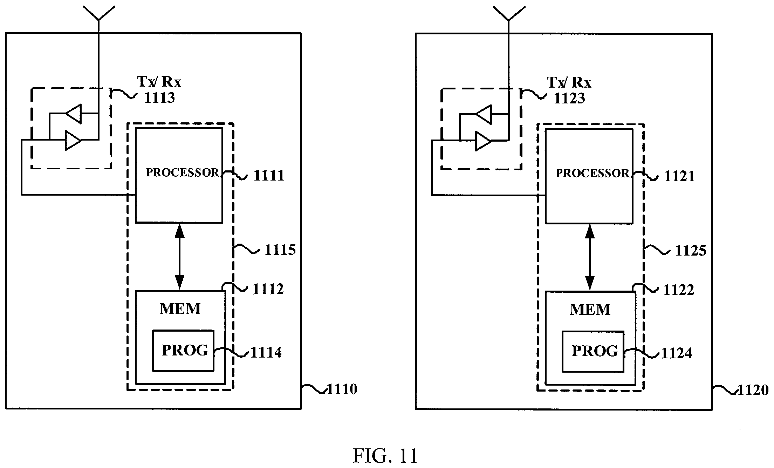

FIG. 11 illustrates a simplified block diagram of an apparatus 1110 that may be embodied in/as a network device, e.g., the network device 101 or 111 shown in FIG. 1, and an apparatus 1120 that may be embodied in/as a terminal device, e.g., one of the terminal devices 102 -104 shown in FIG. 1.

The apparatus 1110 may include one or more processors 1111, such as a data processor (DP) and one or more memorys (MEM) 1112 coupled to the processor 1111. The apparatus 1110 may further include a transmitter TX and receiver RX 1113 coupled to the processor 1111. The MEM 1112 may be non-transitory machine readable storage medium and it may store a program (PROG) 1114. The PROG 1114 may include instructions that, when executed on the associated processor 1111, enable the apparatus 1110 to operate in accordance with the embodiments of the present disclosure, for example to perform the method 400 or 401. A combination of the one or more processors 1111 and the one or more MEMs 1112 may form processing means 1115 adapted to implement various embodiments of the present disclosure.

The apparatus 1120 includes one or more processors 1121, such as a DP, and one or more MEMs 1122 coupled to the processor 1121. The apparatus 920 may further include a suitable TX/ RX 1123 coupled to the processor 1121. The MEM 1122 may be non-transitory machine readable storage medium and it may store a PROG 1124. The PROG 1124 may include instructions that, when executed on the associated processor 1121, enable the apparatus 1120 to operate in accordance with the embodiments of the present disclosure, for example to perform the method 800. A combination of the one or more processors 1121 and the one or more MEMs 1122 may form processing means 1125 adapted to implement various embodiments of the present disclosure.

Various embodiments of the present disclosure may be implemented by computer program executable by one or more of the processors 1111 and 1121, software, firmware, hardware or in a combination thereof.

The MEMs 1112 and 1122 may be of any type suitable to the local technical environment and may be implemented using any suitable data storage technology, such as semiconductor based memory terminal devices, magnetic memory terminal devices and systems, optical memory terminal devices and systems, fixed memory and removable memory, as non-limiting examples.

The processors 1111 and 1121 may be of any type suitable to the local technical environment, and may include one or more of general purpose computers, special purpose computers, microprocessors, digital signal processors DSPs and processors based on multicore processor architecture, as non-limiting examples.

Although some of the above description is made in the context of a wireless system operating in a shared frequency band (e.g., an unlicensed band), it should not be construed as limiting the scope of the present disclosure. The principle and concept of the present disclosure may be more generally applicable to other scenarios.

In addition, the present disclosure may also provide a memory containing the computer program as mentioned above, which includes machine-readable media and machine-readable transmission media. The machine-readable media may also be called computer-readable media, and may include machine-readable storage media, for example, magnetic disks, magnetic tape, optical disks, phase change memory, or an electronic memory terminal device like a random access memory (RAM), read only memory (ROM), flash memory devices, CD-ROM, DVD, Blue-ray disc and the like. The machine-readable transmission media may also be called a carrier, and may include, for example, electrical, optical, radio, acoustical or other form of propagated signals - such as carrier waves, infrared signals, and the like.

The techniques described herein may be implemented by various means so that an apparatus implementing one or more functions of a corresponding apparatus described with an embodiment includes not only prior art means, but also means for implementing the one or more functions of the corresponding apparatus described with the embodiment and it may include separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Example embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including hardware, software, firmware, and a combination thereof. For example, in one embodiment, each block of the block diagrams and flowchart illustrations, and combinations of blocks in the block diagrams and flowchart illustrations can be implemented by computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (400) implemented at a network device (101, 111), comprising:
determining (410) a collision probability with one or more neighboring transmitters (111, 101), wherein the collision probability indicates a probability for a plurality of transmissions to collide due to occupying same or overlapping transmission resources;
selecting (420) a start time position for a plurality of burst transmissions related to the network device (101, 111) based on a result of the determination;
wherein selecting (420) the start time position for the plurality of burst transmissions related to the network device (101, 111) based on the result of the determination comprises:
in response to determining (410) that the collision probability is above a first threshold,
selecting (421) a first start time position from a set of candidate start time positions for a first plurality of burst transmissions in a first time interval;
monitoring (422) a transmission characteristic of the first plurality of burst transmissions in the first time interval; and
reselecting (423) a second start time position from the set of candidate start time positions for a second plurality of burst transmissions in a subsequent second time interval based on the monitored transmission characteristic; and
indicating (440) the selected start time position to a terminal device (102, 103, 104).

2. The method (400) according to Claim 1, further comprising:
determining (430) a parameter for sensing a channel based on the selected start time position.

3. The method (400) according to Claim 1, wherein said reselecting (423) a second start time position comprises:
if the monitored transmission characteristic indicating a collision probability equal to or greater than a second threshold, reselecting (423-1), from the set of candidate start time positions, the second start time position that is different from the first start time position; and
if the monitored transmission characteristic indicating a collision probability below the threshold, maintaining (423-2) the selected first start time position unchanged as the second start time position.

4. The method (400) according to Claim 1, wherein said determining (410) a collision probability is based on information indicating one or more of:
whether the one or more neighboring transmitters transmit in a channel,
whether the one or more neighboring transmitters are synchronized with the network device,
a timing difference in a subframe boundary between the one or more neighboring transmitters and the network device,
whether the one or more neighboring transmitters and the network device are supported by a same operator,
a further start time position for a further burst transmission by the one or more neighboring transmitters,
a configuration on the start time position for the burst transmission related to the network device, and
a load status of a frequency band in which the network device is operating.

5. The method (400) according to Claim 4, wherein said determining (410) the collision probability based on the information comprises:
determining (410) that the collision probability is below a fourth threshold, if the timing difference in a subframe boundary between the one or more neighboring transmitters and the network device is greater than a third threshold.

6. The method (400) according to Claim 5, wherein said selecting (420) a start time position for a plurality of burst transmission related to the network device (101, 111) based on a result of the determination comprises:
if the collision probability is determined to be below the fourth threshold, selecting (420) the start time position regardless of a start time position selected by the one or more neighboring transmitters.

7. The method (400) according to Claim 1, wherein
determining (410) a collision probability with the one or more neighboring transmitters by one or more of:
measuring (411) a signal transmitted in a frequency band in which the network device is operating; and
receiving (412) a report from a terminal device served by the network device, the report indicating information related to the collision probability.

8. A network device (900), comprising:
a collision determination unit (901), configured to determine a collision probability with one or more neighboring transmitters (111, 101), wherein the collision probability indicates a probability for a plurality of transmissions to collide due to occupying same or overlapping transmission resources;
a selection unit (902), configured to select a start time position for a plurality of burst transmissions related to the network device (101, 111) based on a result of the determination,
wherein said selection unit (902) comprises an initial selection unit (912), a monitoring unit (922) and a reselection unit (932), and wherein,
in response to a determination made by the collision determination unit (901) that the collision probability is above a first threshold,
the initial selection unit (912) is configured to select a first start time position from a set of candidate start time positions for a first plurality of burst transmissions in a first time interval;
the monitoring unit (922) is configured to monitor a transmission characteristic of the first plurality of burst transmissions in the first time interval; and
the reselection unit (932) is configured to reselect a second start time position from the set of candidate start time positions for a second plurality of burst transmissions in a subsequent second time interval based on the monitored transmission characteristic; and
an indication unit (904), configured to indicate the selected start time position to a terminal device (102, 103, 104).

9. The network device (900) according to claim 8, further comprising:
a parameter determining unit (903), configured to determine a parameter for sensing a channel based on the selected start time position.

10. The network device (900) according to claim 8, wherein the reselection unit (932) is configured to:
if the monitored transmission characteristic indicating a collision probability equal to or greater than a second threshold, reselect, from the set of candidate start time positions, the second start time position that is different from the first start time position; and
if the monitored transmission characteristic indicating a collision probability below the threshold, maintain the selected first start time position unchanged as the second start time position.

11. The network device (900) according to claim 8, wherein the collision determination unit (901) determines the collision probability based on information indicating one or more of:
whether the one or more neighboring transmitters transmit in a channel,
whether the one or more neighboring transmitters are synchronized with the network device,
a timing difference in a subframe boundary between the one or more neighboring transmitters and the network device,
whether the one or more neighboring transmitters and the network device are supported by a same operator,
a further start time position for a further burst transmission by the one or more neighboring transmitters,
a configuration on the start time position for the burst transmission related to the network device, and
a load status of a frequency band in which the network device is operating.

12. The network device (900) according to claim 11, wherein the information indicates the timing difference in a subframe boundary between the one or more neighboring transmitters and the network device, and wherein said collision determination unit (901) is configured to determine that the collision probability is below a fourth threshold, if the timing difference in a subframe boundary between the one or more neighboring transmitters and the network device is greater than a third threshold.

13. The network device (900) according to claim 12, wherein said selection unit (902) is configured to select the start time position regardless of a start time position selected by the one or more neighboring transmitters, if the collision probability is determined to be below the fourth threshold.

14. The network device according to claim 8, wherein said collision determination unit (901) comprises one or more of:
a measurement unit (911), configured to measure a signal transmitted in a frequency band in which the network device is operating; and
a report receiving unit (921), configured to receive a report from a terminal device served by the network device, the report indicating information related to the collision probability.

## Patentansprüche

1. Verfahren (400), das bei einer Netzwerkvorrichtung (101, 111) implementiert ist, umfassend:
Ermitteln (410) einer Wahrscheinlichkeit der Kollision mit einem oder mehreren benachbarten Sendern (111, 101), wobei die Kollisionswahrscheinlichkeit eine Wahrscheinlichkeit dafür, dass eine Vielzahl von Übertragungen aufgrund der Belegung derselben oder überlappender Übertragungsressourcen kollidieren, angibt;
auf einem Ergebnis der Ermittlung basierendes Auswählen (420) einer Startzeitposition für eine Vielzahl von mit der Netzwerkvorrichtung (101, 111) in Verbindung stehenden Burst-Übertragungen;
wobei das auf dem Ergebnis der Ermittlung basierende Auswählen (420) der Startzeitposition für eine Vielzahl von mit der Netzwerkvorrichtung (101, 111) in Verbindung stehenden Burst-Übertragungen umfasst:
als Reaktion auf das Ermitteln (410), dass die Kollisionswahrscheinlichkeit über einem ersten Schwellenwert liegt,
Auswählen (421) einer ersten Startzeitposition aus einer Menge von Kandidaten-Startzeitpositionen für eine erste Vielzahl von Burst-Übertragungen in einem ersten Zeitintervall;
Überwachen (422) einer Übertragungscharakteristik der ersten Vielzahl von Burst-Übertragungen in dem ersten Zeitintervall; und
auf der überwachten Übertragungscharakteristik basierendes Neuauswählen (423) einer zweiten Startzeitposition aus der Menge von Kandidaten-Startzeitpositionen für eine zweite Vielzahl von Burst-Übertragungen in einem nachfolgenden zweiten Zeitintervall; und
Mitteilen (440) der ausgewählten Startzeitposition an ein Endgerät (102, 103, 104).

2. Verfahren (400) nach Anspruch 1, ferner umfassend:
auf der ausgewählten Startzeitposition basierendes Ermitteln (430) eines Parameters zum Abtasten eines Kanals.

3. Verfahren (400) nach Anspruch 1, wobei das Neuauswählen (423) einer zweiten Startzeitposition umfasst:
wenn die überwachte Übertragungseigenschaft auf eine Kollisionswahrscheinlichkeit verweist, die gleich oder größer als ein zweiter Schwellenwert ist, Neuauswählen (423-1) der zweiten, sich von der ersten Startzeitposition unterscheidenden Startzeitposition aus der Menge von Kandidaten-Startzeitpositionen; und
wenn die überwachte Übertragungscharakteristik auf eine Kollisionswahrscheinlichkeit unter dem Schwellenwert verweist, unverändertes Beibehalten (423-2) der ausgewählten ersten Startzeitposition als die zweite Startzeitposition.

4. Verfahren (400) nach Anspruch 1, wobei das Ermitteln (410) einer Kollisionswahrscheinlichkeit auf Informationen basiert, die eines oder mehreres aus Folgendem angeben:
ob der eine oder die mehreren benachbarten Sender auf einem Kanal senden,
ob der eine oder die mehreren benachbarten Sender mit der Netzwerkvorrichtung synchronisiert sind,
eine Zeitdifferenz bei einer Unterrahmengrenze zwischen dem einen oder den mehreren benachbarten Sendern und der Netzwerkvorrichtung,
ob der eine oder die mehreren benachbarten Sender und die Netzwerkvorrichtung von einem gleichen Betreiber unterstützt werden,
eine weitere Startzeitposition für eine weitere Burst-Übertragung durch den einen oder die mehreren benachbarten Sender,
eine Konfiguration bei der Startzeitposition für die mit der Netzwerkvorrichtung in Verbindung stehenden Burst-Übertragung, und
einen Auslastungszustand eines von der Netzwerkvorrichtung verwendeten Frequenzbands.

5. Verfahren (400) nach Anspruch 4, wobei das auf den Informationen basierende Ermitteln (410) der Kollisionswahrscheinlichkeit umfasst:
Ermitteln (410), dass die Kollisionswahrscheinlichkeit unter einem vierten Schwellenwert liegt, wenn die Zeitdifferenz bei einer Unterrahmengrenze zwischen dem einen oder den mehreren benachbarten Sendern und der Netzwerkvorrichtung größer als ein dritter Schwellenwert ist.

6. Verfahren (400) nach Anspruch 5, wobei das auf einem Ergebnis der Ermittlung basierende Auswählen (420) einer Startzeitposition für eine Vielzahl von mit Netzwerkvorrichtung (101, 111) in Verbindung stehenden Burst-Übertragungen umfasst:
wenn bestimmt wurde, dass die Kollisionswahrscheinlichkeit unter dem vierten Schwellenwert liegt, von einer durch den einen oder die mehreren benachbarten Sender ausgewählten Startzeitposition unabhängiges Auswählen (420) der Startzeitposition.

7. Verfahren (400) nach Anspruch 1, wobei
Ermitteln (410) einer Wahrscheinlichkeit der Kollision mit dem einen oder den mehreren benachbarten Sendern durch eines oder mehreres aus:
Messen (411) eines Signals, das in einem von der Netzwerkvorrichtung verwendeten Frequenzband übertragen wird; und
Empfangen (412) eines Berichts von einem Endgerät, das über das Netzwerkgerät bedient wird, wobei der Bericht Informationen zu der Kollisionswahrscheinlichkeit enthält.

8. Netzwerkvorrichtung (900), umfassend:
eine Kollisionsermittlungseinheit (901), die eingerichtet ist zum Bestimmen einer Wahrscheinlichkeit der Kollision mit einem oder mehreren benachbarten Sendern (111, 101), wobei die Kollisionswahrscheinlichkeit eine Wahrscheinlichkeit dafür, dass eine Vielzahl von Übertragungen aufgrund der Belegung derselben oder überlappender Übertragungsressourcen kollidieren, angibt;
eine Auswahleinheit (902), die eingerichtet ist zum Auswählen, basierend auf einem Ergebnis der Ermittlung, einer Startzeitposition für eine Vielzahl von mit der Netzwerkvorrichtung (101, 111) in Verbindung stehenden Burst-Übertragungen;
wobei die Auswahleinheit (902) eine Erstauswahleinheit (912), eine Überwachungseinheit (922) und eine Neuauswahleinheit (932) umfasst, und wobei,
als Reaktion auf eine Ermittlung durch die Kollisionsermittlungseinheit (901), dass die Kollisionswahrscheinlichkeit über einem ersten Schwellenwert liegt,
die Erstauswahleinheit (912) eingerichtet ist zum Auswählen einer ersten Startzeitposition aus einer Menge von Kandidaten-Startzeitpositionen für eine erste Vielzahl von Burst-Übertragungen in einem ersten Zeitintervall;
die Überwachungseinheit (922) dazu ist zum Überwachen einer Übertragungscharakteristik der ersten Vielzahl von Burst-Übertragungen in dem ersten Zeitintervall; und
die Neuauswahleinheit (932) eingerichtet ist zum Neuauswählen, basierend auf der überwachten Übertragungscharakteristik, einer zweiten Startzeitposition aus der Menge von Kandidaten-Startzeitpositionen für eine zweite Vielzahl von Burst-Übertragungen in einem nachfolgenden zweiten Zeitintervall; und
eine Mitteileinheit (904), die eingerichtet ist zum Mitteilen eines Endgeräts (102, 103, 104) der ausgewählten Startzeitposition.

9. Netzwerkvorrichtung (900) nach Anspruch 8, ferner umfassend: eine Parameterermittlungseinheit (903), die eingerichtet ist zum Bestimmen, basierend auf der ausgewählten Startzeitposition, eines Parameters zum Abtasten eines Kanals.

10. Netzwerkvorrichtung (900) nach Anspruch 8, wobei die Neuauswahleinheit (932) eingerichtet ist zum:
wenn die überwachte Übertragungseigenschaft auf eine Kollisionswahrscheinlichkeit verweist, die gleich oder größer als ein zweiter Schwellenwert ist, Auswählen der zweiten, sich von der ersten Startzeitposition unterscheidenden Startzeitposition aus der Menge von Kandidaten-Startzeitpositionen; und
wenn die überwachte Übertragungseigenschaft auf eine Kollisionswahrscheinlichkeit unter dem Schwellenwert verweist, unverändertes Beibehalten der ausgewählten ersten Startzeitposition als die zweite Startzeitposition.

11. Netzwerkvorrichtung (900) nach Anspruch 8, wobei die Kollisionsermittlungseinheit (901) die Kollisionswahrscheinlichkeit basierend auf Informationen bestimmt, die eines oder mehreres aus Folgendem angeben:
ob der eine oder die mehreren benachbarten Sender auf einem Kanal senden,
ob der eine oder die mehreren benachbarten Sender mit der Netzwerkvorrichtung synchronisiert sind,
eine Zeitdifferenz bei einer Unterrahmengrenze zwischen dem einen oder den mehreren benachbarten Sendern und der Netzwerkvorrichtung,
ob der eine oder die mehreren benachbarten Sender und die Netzwerkvorrichtung von einem gleichen Betreiber unterstützt werden,
eine weitere Startzeitposition für eine weitere Burst-Übertragung durch den einen oder die mehreren benachbarten Sender,
eine Konfiguration bei der Startzeitposition für die mit der Netzwerkvorrichtung in Verbindung stehenden Burst-Übertragung, und
einen Auslastungszustand eines von der Netzwerkvorrichtung verwendeten Frequenzbands.

12. Netzwerkvorrichtung (900) nach Anspruch 11, wobei die Informationen die Zeitdifferenz bei einem Unterrahmengrenze zwischen dem einen oder den mehreren benachbarten Sendern und der Netzwerkvorrichtung angeben, und wobei die Kollisionsermittlungseinheit (901) eingerichtet ist zum Bestimmen, dass die Kollisionswahrscheinlichkeit unter einem vierten Schwellenwert liegt, wenn die Zeitdifferenz bei einer Unterrahmengrenze zwischen dem einen oder den mehreren benachbarten Sendern und der Netzwerkvorrichtung größer als ein dritter Schwellenwert ist.

13. Netzwerkvorrichtung (900) nach Anspruch 12, wobei die Auswahleinheit (902) eingerichtet ist zum Auswählen der Startzeitposition unabhängig von einer durch den einen oder die mehreren benachbarten Sender ausgewählten Startzeitposition, wenn bestimmt wurde, dass die Kollisionswahrscheinlichkeit unter dem vierten Schwellenwert liegt.

14. Netzwerkvorrichtung nach Anspruch 8, wobei die Kollisionsermittlungseinheit (901) eines oder mehreres umfasst aus:
einer Messeinheit (911), die eingerichtet ist zum Messesn eines Signals, das in einem von der Netzwerkvorrichtung verwendeten Frequenzband übertragen wird; und
einer Berichtsempfangseinheit (921), die eingerichtet ist zum Empfangen eines Berichts von einem Endgerät, das über das Netzwerkgerät bedient wird, wobei der Bericht Informationen zu der Kollisionswahrscheinlichkeit enthält.

## Revendications

1. Procédé (400) implémenté au niveau d'un dispositif réseau (101, 111), comprenant :
la détermination (410) d'une probabilité de collision avec un ou plusieurs émetteurs voisins (111, 101), dans lequel la probabilité de collision indique une probabilité pour qu'une pluralité de transmissions entrent en collision du fait qu'elles occupent des ressources de transmission identiques ou se chevauchant ;
la sélection (420) d'une position temporelle de départ pour une pluralité de transmissions par rafales se rapportant au dispositif réseau (101, 111) sur la base d'un résultat de la détermination ;
dans lequel la sélection (420) de la position temporelle de départ pour la pluralité de transmissions par rafales se rapportant au dispositif réseau (101, 111) sur la base du résultat de la détermination comprend :
en réponse à la détermination (410) que la probabilité de collision est supérieure à un premier seuil,
la sélection (421) d'une première position temporelle de départ à partir d'un ensemble de positions temporelles de départ candidates pour une première pluralité de transmissions par rafales dans un premier intervalle de temps ;
la surveillance (422) d'une caractéristique de transmission de la première pluralité de transmissions par rafales dans le premier intervalle de temps ; et
la resélection (423) d'une deuxième position temporelle de départ à partir de l'ensemble de positions temporelles de départ candidates pour une deuxième pluralité de transmissions par rafales dans un deuxième intervalle de temps ultérieur sur la base de la caractéristique de transmission surveillée ; et
l'indication (440) de la position temporelle de départ sélectionnée à un dispositif terminal (102, 103, 104).

2. Procédé (400) selon la revendication 1, comprenant en outre :
la détermination (430) d'un paramètre pour détecter un canal sur la base de la position temporelle de départ sélectionnée.

3. Procédé (400) selon la revendication 1, dans lequel ladite resélection (423) d'une deuxième position temporelle de départ comprend :
si la caractéristique de transmission surveillée indiquant une probabilité de collision égale ou supérieure à un deuxième seuil, la resélection (423-1), à partir de l'ensemble de positions temporelles de départ candidates, de la deuxième position temporelle de départ qui est différente de la première position temporelle de départ ; et
si la caractéristique de transmission surveillée indiquant une probabilité de collision inférieure au seuil, le maintien (423-2) de la première position temporelle de départ sélectionnée inchangée en guise de deuxième position temporelle de départ.

4. Procédé (400) selon la revendication 1, dans lequel ladite détermination (410) d'une probabilité de collision est basée sur des informations indiquant un ou plusieurs parmi :
si le ou les émetteurs voisins transmettent dans un canal,
si le ou les émetteurs voisins sont synchronisés avec le dispositif réseau,
une différence de temporisation dans une limite de sous-trame entre le ou les émetteurs voisins et le dispositif réseau,
si le ou les émetteurs voisins et le dispositif réseau sont pris en charge par un même opérateur,
une position temporelle de départ supplémentaire pour une transmission par rafales supplémentaire par le ou les émetteurs voisins,
une configuration sur la position temporelle de départ pour la transmission par rafales se rapportant au dispositif réseau, et
un état de charge d'une bande de fréquence dans laquelle le dispositif réseau fonctionne.

5. Procédé (400) selon la revendication 4, dans lequel ladite détermination (410) de la probabilité de collision sur la base des informations comprend :
la détermination (410) que la probabilité de collision est inférieure à un quatrième seuil, si la différence de temporisation dans une limite de sous-trame entre le ou les émetteurs voisins et le dispositif réseau est supérieure à un troisième seuil.

6. Procédé (400) selon la revendication 5, dans lequel ladite sélection (420) d'une position temporelle de départ pour une pluralité de transmissions par rafales se rapportant au dispositif réseau (101, 111) sur la base d'un résultat de la détermination comprend :
si la probabilité de collision est déterminée comme étant inférieure au quatrième seuil, la sélection (420) de la position temporelle de départ indépendamment d'une position temporelle de départ sélectionnée par le ou les émetteurs voisins.

7. Procédé (400) selon la revendication 1, dans lequel la détermination (410) d'une probabilité de collision avec le ou les émetteurs voisins est une ou plusieurs parmi :
la mesure (411) d'un signal transmis dans une bande de fréquence dans laquelle le dispositif réseau fonctionne ; et
la réception (412) d'un rapport depuis un dispositif terminal desservi par le dispositif réseau, le rapport indiquant des informations se rapportant à la probabilité de collision.

8. Dispositif réseau (900), comprenant :
une unité de détermination de collision (901), configurée pour déterminer une probabilité de collision avec un ou plusieurs émetteurs voisins (111, 101), dans lequel la probabilité de collision indique une probabilité qu'une pluralité de transmissions entrent en collision du fait qu'elles occupent des ressources de transmission identiques ou se chevauchant ;
une unité de sélection (902), configurée pour sélectionner une position temporelle de départ pour une pluralité de transmissions par rafales se rapportant au dispositif réseau (101, 111) sur la base d'un résultat de la détermination,
dans lequel ladite unité de sélection (902) comprend une unité de sélection initiale (912), une unité de surveillance (922) et une unité de resélection (932), et dans lequel,
en réponse à une détermination réalisée par l'unité de détermination de collision (901) que la probabilité de collision est supérieure à un premier seuil,
l'unité de sélection initiale (912) est configurée pour sélectionner une première position temporelle de départ à partir d'un ensemble de positions temporelles de départ candidates pour une première pluralité de transmissions par rafales dans un premier intervalle de temps ;
l'unité de surveillance (922) est configurée pour surveiller une caractéristique de transmission de la première pluralité de transmissions par rafales dans le premier intervalle de temps ; et
l'unité de resélection (932) est configurée pour resélectionner une deuxième position temporelle de départ à partir de l'ensemble de positions temporelles de départ candidates pour une deuxième pluralité de transmissions par rafales dans un deuxième intervalle de temps ultérieur sur la base de la caractéristique de transmission surveillée ; et
une unité d'indication (904), configurée pour indiquer la position temporelle de départ sélectionnée à un dispositif terminal (102, 103, 104).

9. Dispositif réseau (900) selon la revendication 8, comprenant en outre :
une unité de détermination de paramètre (903), configurée pour déterminer un paramètre pour détecter un canal sur la base de la position temporelle de départ sélectionnée.

10. Dispositif réseau (900) selon la revendication 8, dans lequel l'unité de resélection (932) est configurée pour :
si la caractéristique de transmission surveillée indiquant une probabilité de collision égale ou supérieure à un deuxième seuil, resélectionner, à partir de l'ensemble de positions temporelles de départ candidates, la deuxième position temporelle de départ qui est différente de la première position temporelle de départ ; et
si la caractéristique de transmission surveillée indiquant une probabilité de collision inférieure au seuil, maintenir la première position temporelle de départ sélectionnée inchangée en guise de deuxième position temporelle de départ.

11. Dispositif réseau (900) selon la revendication 8, dans lequel l'unité de détermination de collision (901) détermine la probabilité de collision sur la base d'informations indiquant un ou plusieurs parmi :
si le ou les émetteurs voisins transmettent dans un canal,
si le ou les émetteurs voisins sont synchronisés avec le dispositif réseau,
une différence de temporisation dans une limite de sous-trame entre le ou les émetteurs voisins et le dispositif réseau,
si le ou les émetteurs voisins et le dispositif réseau sont pris en charge par un même opérateur,
une position temporelle de départ supplémentaire pour une transmission par rafales supplémentaire par le ou les émetteurs voisins,
une configuration sur la position temporelle de départ pour la transmission par rafales se rapportant au dispositif réseau, et
un état de charge d'une bande de fréquence dans laquelle le dispositif réseau fonctionne.

12. Dispositif réseau (900) selon la revendication 11, dans lequel les informations indiquent la différence de temporisation dans une limite de sous-trame entre le ou les émetteurs voisins et le dispositif réseau, et dans lequel ladite unité de détermination de collision (901) est configurée pour déterminer que la probabilité de collision est inférieure à un quatrième seuil, si la différence de temporisation dans une limite de sous-trame entre le ou les émetteurs voisins et le dispositif réseau est supérieure à un troisième seuil.

13. Dispositif réseau (900) selon la revendication 12, dans lequel ladite unité de sélection (902) est configurée pour sélectionner la position temporelle de départ indépendamment d'une position temporelle de départ sélectionnée par le ou les émetteurs voisins, si la probabilité de collision est déterminée comme étant inférieure au quatrième seuil.

14. Dispositif réseau selon la revendication 8, dans lequel ladite unité de détermination de collision (901) comprend une ou plusieurs parmi :
une unité de mesure (911), configurée pour mesurer un signal transmis dans une bande de fréquence dans laquelle le dispositif réseau fonctionne ; et
une unité de réception de rapport (921), configurée pour recevoir un rapport depuis un dispositif terminal desservi par le dispositif réseau, le rapport indiquant des informations se rapportant à la probabilité de collision.
